# EUROPEAN PATENT APPLICATION

(11) **EP 1 972 195 A1**
(43) Date of publication of application: **24.09.2008**
(21) Application number: 07104835.9
(22) Date of filing: 23.03.2007
(51) Int. Cl.: A01N 1/00, F26B 3/347, B02C 1/00, C05F 1/02

(54) **Method for processing of a dead human or animal body or part of a body**

(71) Applicant: DeMaCo Holland bv, 1723 ZG Noord Scharwoude (NL)
(72) Inventor: Boogaard, Irma, 1723 ZG, Noord Scharwoude (NL); Wulffers, Chris, 1723 ZG, Noord Scharwoude (NL)
(74) Representative: Hooiveld, Arjen Jan Winfried

(57) **Abstract**

A method for processing a dead human or animal body or part of a body, wherein said body or body part is subjected to
- a dehydration treatment, in which moisture is extracted from the body or the body part,
- a freezing treatment, in which the body or the body part is made brittle to such an extent that a pulse or a small mechanical load imparted thereon may cause the body or body part to fall apart, and
- a reduction treatment after the freezing treatment, in which the body or body part is divided into fractions, characterised in that
- said dehydration treatment is carried out at a temperature higher than the normal live body temperature of the body or the body part.

## Description

The invention relates to a method for processing a dead human or animal body or part of a body, wherein said body or body part is subjected to
- a dehydration treatment, in which moisture is extracted from the body or the body part,
- a freezing treatment, in which the body or the body part is made brittle to such an extent that a pulse or a small mechanical load imparted thereon may cause the body or body part to fall apart, and
- a reduction treatment after the freezing treatment, in which the body or body part is divided into fractions.

Such a method is known from European patent No. 1 234 151 (Promessa AB).

These days, a deceased human being or a deceased (domestic) animal is usually buried or cremated. A drawback of burying a dead body or a cadaver is that such a dead body or a cadaver takes up comparatively much space in the ground, which is generally found to be undesirable, in particular in densely populated regions where the available living space is limited. Furthermore, all kinds of substances that burden the environment find their way into the ground water during the decomposition process of a dead body or a cadaver. Such substances are for example heavy metals, with which a human being or an animal has come into contact in the course of his/her/its life, and which have been stored in the body fat for safety reasons. A drawback of cremating a dead body or a cadaver, on the other hand, is that comparatively much energy is needed for incinerating a dead body or a cadaver, whilst combustion gases which are harmful to the environment are released into the atmosphere during said process. Burying or cremating a dead body or a cadaver also has drawbacks of a more personal nature. Thus, some people resent the idea of being incinerated by fire, whilst other people are horrified at the thought of undergoing the decomposition process when they are buried. Finally, burying or cremating also has drawbacks from an ecological point of view. Some people want to "return to nature" after dying and function as a nutrient for nature. Many of these nutrients are lost in the combustion process upon cremation, however. Also when a dead body is buried, however, there is no question of an efficient composting of the dead body taking place, since the oxygen required for composting organic material is absent at the depth at which dead bodies are usually buried. As already noted before, a decomposition process of a dead body therefore takes place in which hardly any nutrients find their way into the ecosystem, if at all.

An alternative to burying or cremating a dead body or a cadaver is the so-called "cryomation", as described in the aforesaid European patent No. 1 234 151 (Promessa AB). According to a method disclosed in said European patent specification, a dead human body is first freeze-dried, after which it is immersed in a bath of liquid nitrogen in order to make the body brittle. The brittle body is subsequently pulverised by applying a mechanical shock. Said freeze-drying is carried out in order to extract as much moisture from the body as possible. Freezing by means of liquid nitrogen is thus an efficient process from an energetic viewpoint. The fact is that the presence of moisture would retard the freezing process, which involves additional time and cost. The drawback of freeze-drying, however, is the considerable length of time required for extracting the moisture from the body, which again involves additional cost. Furthermore, the method of applying a mechanical shock to achieve pulverisation is generally not an efficient method, especially if a dead body is not completely frozen, for example due to the presence of moisture inside the body.

The object of the invention is to improve the prior art, in particular to provide a method by means of which a dead human or animal body or part of a body can be processed in an ethical, efficient, reliable and/or simple manner, wherein the body or body part is divided into (very) small parts.

In order to accomplish that object, a method of the kind mentioned in the introduction is characterised in that the dehydration treatment is carried out at a temperature higher than the normal live body temperature of the body or the body part. The temperature for the dehydration treatment is in particular selected between 50 °C and 95 °C, preferably between 70 °C and 80 °C, more preferably between 75 °C and 77 °C. Preferably, the dehydration treatment is continued until the weight of the body of body part has decreased to maximally 35%, preferably maximally 30%, more preferably maximally 25% of the normal live weight thereof. The invention rejects the preconceived notion that prevails in the world of dead body or cadaver processing that the moisture present in a dead body or cadaver can only be removed therefrom by freeze-drying ("dehydration") in order to be able to carry out the aforesaid freezing treatment in an efficient manner. The invention now points in a direction which is altogether different for those skilled in the art, viz. that the drawbacks of the prior art are overcome by proposing a dehydration step which employs a dehydration temperature higher than the normal body temperature of a living human being (about 37 °C) or a living animal.

It is noted that it is common knowledge that dead human or animal tissue becomes so brittle at very low sub-zero temperatures that it can be readily pulverised.

In a preferred embodiment of a method according to the invention, the dehydration treatment is carried out before the freezing treatment. In another preferred variant, the dehydration treatment is carried out after the reduction treatment. In practice the latter variant has appeared to be slightly less advantageous as regards energy consumption than the former variant. It will be apparent to those skilled in the art that the dehydration treatment may also be carried out in two steps, if desired, that is, both before the freezing treatment and after the reduction treatment. It has been found to be very advantageous to expose the dead human or animal body or body part to microwaves during the dehydration treatment so as to accelerate the process. To that end the dead body of the cadaver is placed in a microwave oven. In another preferred variant, the dead body or the cadaver is exposed to radiation heat, conduction heat and/or convection heat during the dehydration treatment.

In another preferred embodiment of a method according to the invention, the body or a body part is exposed to liquid nitrogen (N₂) during the freezing treatment. The body or body part is in that case preferably immersed in a bath of liquid nitrogen. As already said before, the liquid nitrogen, which has a temperature of -196 °C, functions to make the body or body part brittle, to such an extent that said body or body part can be easily pulverised, for example by means of a pulse treatment.

In another preferred embodiment of a method according to the invention, the reduction treatment comprises a pulse treatment. In another preferred variant, the reduction treatment comprises a friction treatment. The friction treatment is carried out either instead of the pulse treatment or in combination with the pulse treatment. Tests have shown that subjecting a dehydrated and frozen cadaver to low-force impacts and/or friction enables an efficient reduction into small fractions thereof, using a very short reduction time of a few seconds.

In another preferred embodiment of a method according to the invention, use is made of at least two rigid plates, between which the body or body part is placed during the reduction treatment. The upper plate is preferably suspended in such a manner as to be freely movable in vertical direction, whilst the lower plate is moved in a pulsating manner so as to obtain an impact or pulse treatment and a friction treatment during the reduction treatment. The upper plate in particular only has freedom of movement in one direction, viz. in vertical direction, so that the upper plate - as a result of the pulsating movement of the lower plate - can optimally carry out a pulse treatment on the body that is present between the plates. The lower plate at the same time subjects the body to a friction treatment. The pulsating movement of the lower plate can be realised in a simple manner by connecting the lower plate to at least two driven eccentric shafts. Tests have shown that excellent reduction results are obtained by maintaining the plates at the freezing temperature. Preferably this is realised by passing liquid nitrogen through the plates. Preferably, a closed system of liquid nitrogen is used in that case.

In another preferred embodiment of a method according to the invention, the lower plate is provided with grooves. The grooves are preferably provided in a herringbone pattern in the surface of the lower plate. As a result of this, fractions of the ground body or body parts are driven outwards, so that they can be collected outside the plates for further processing.

In another preferred embodiment of a method according to the invention, the lower plate is disposed at an inclined angle with respect to the horizontal, wherein the angle of inclination of the lower plate is preferably selected between 0° and 10°, more preferably between 4° and 6°. Thus, fractions of the fractionated body or body part can be readily transported from a position between the plates to a position outside the plates and be collected outside the plates for further processing.

The invention also relates to a device for carrying out the method according to the invention. To carry out the aforesaid reduction treatment, the present device comprises at least two rigid plates for placing the body or body part therebetween, wherein the upper plate preferably is freely movable in vertical direction. The other plate is preferably capable of pulsating movement, so that the upper plate can subject the body or body part that is present between the plates to a pulse or impact treatment. To carry out the aforesaid dehydration treatment, the present device preferably comprises a microwave oven for emitting microwaves towards the body or body part, and/or a heat device for heating the body or body part through radiation, convection or conduction. To that end said heat device comprises a heat lamp, for example.

The invention will now be explained with reference to figures illustrated in a drawing, in which:
- Figure 1 schematically shows a device according to the invention for use during the dehydration treatment;
- Figure 2 schematically shows a device according to the invention for use during the reduction treatment; and
- Figures 3a-c schematically show the steps of the reduction treatment.

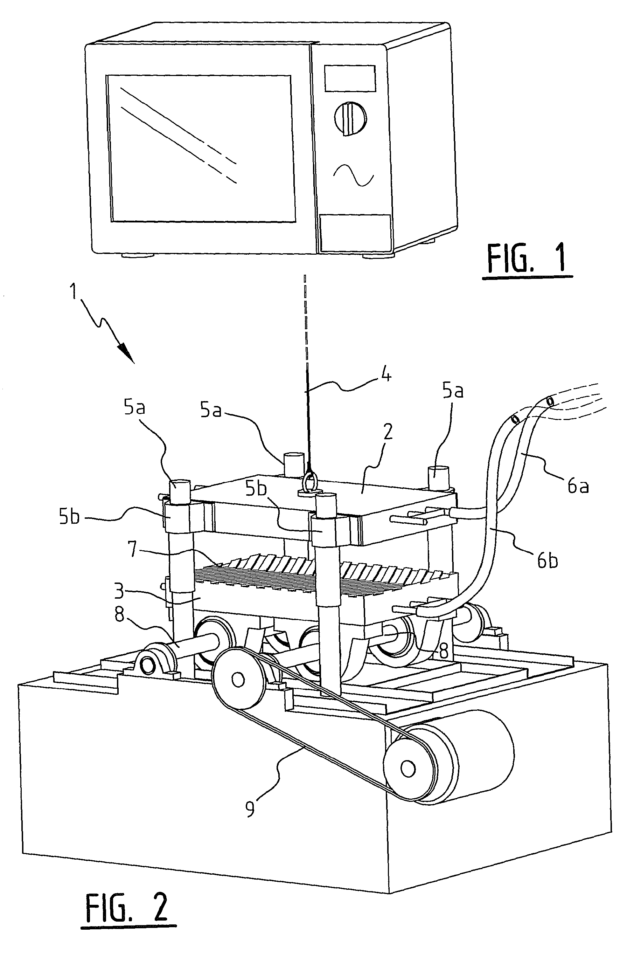

In figure 1 a device for carrying out the dehydration treatment is schematically shown. In a preferred embodiment, said device is an oven with a target temperature of about 77 °C. The device is furthermore capable of emitting microwaves, which significantly reduce the duration of the dehydration treatment.

Figure 2 shows a device 1 for use during the reduction treatment of a dead body or a body part, which device comprises an upper plate 2 and the lower plate 3, between which the body or body part to be treated is placed. Grooves 7 are formed in a herringbone pattern in the upper surface of the lower plate 3. The upper plate 2 is suspended from a cable 4 and can be adjusted for height by means of a device which is not shown, whilst movement in all other directions is restricted by fixing means 5d and 5b. The lower plate 3 is connected to eccentric shafts 8 so as to obtain a pulsating movement of the lower plate 3. The shafts 8 are connected to a drive unit 9 (not specified in more detail herein). To maintain the plates 2 and 3 at the desired low temperature during the reduction treatment, liquid nitrogen is passed through the upper plate 2 and the lower plate 3 via supply hoses 6a and the 60b, respectively. In this embodiment, an open nitrogen system is used, in which the nitrogen exits the plate on the other side again and evaporates into the surrounding atmosphere.

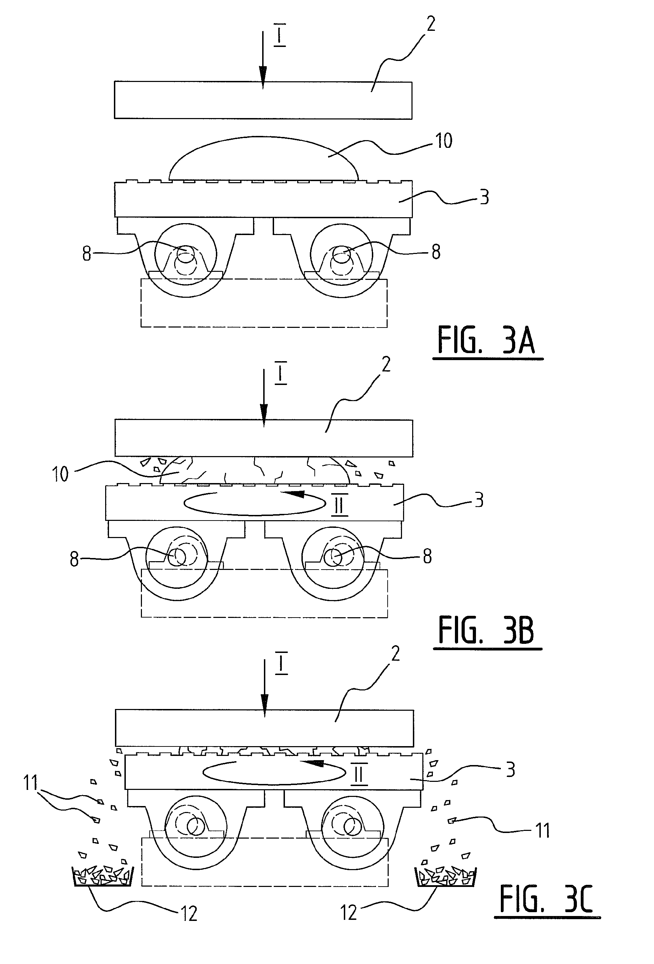

Figures 3a-c schematically show the steps of the reduction treatment, in which a frozen, brittle dead body 10 has been placed between the plates 2 and 3. In figure 3a the cable 4 is paid out and the upper plate 2 is moved in a direction I towards the lower plate 3. At the same time, the drive unit 9 is started, setting the lower plate 2 moving in a pulsating manner as indicated at II in figure 3b, as a result of which the body 10 is subjected to a friction treatment. As a result of said circular movement of the lower plate 3, a vertical pulsating movement is also imparted to the upper plate 2 upon contact of the upper plate 2 with the body 10, so that a pulse treatment is carried out. It should be noted that said pulse and friction treatments are subtle treatments, so that the body 10 is not subjected to heavy loads, which might be objectionable from an ethical point of view. However, since the body 10 is frozen to such an extent that it is brittle, the body 10 will nevertheless be divided into small fractions 11 under the influence of the small mechanical loads or pulses being imparted thereon during the treatments, as is shown in figure 3c. Said fractions 11 are moved towards the outer edge of the lower plate 3 through the grooves 7 in the lower plate 3, whereupon they may be collected in collecting means 12.

In experiments, several bodies and body parts from various animals and of varying composition and weight were subjected to the dehydration treatment according to the invention. The body or body part was heated to a temperature of about 80 °C by means of heat convection, using heat lamps. The results of the various experiments are summarised in the table below:

| Object | Original mass (kg) | Mass reduction (%) | Remaining mass (%) |
|---|---|---|---|
| Chicken leg | 0.238 | 66 | 34 |
| Chicken | 0.352 | 73 | 27 |
| Pig I | 5.96 | 82 | 18 |
| Pig II | 20.6 | 80 | 20 |
| Pig III | 42.3 | 72 | 28 |
| Pig IV | 84.0 | 70 | 30 |

A dehydration treatment at a temperature higher than the normal live body temperature of the body or the body part appears to be efficient; the mass of pig III, for example, was reduced from 42.3 kg to 28% of its original mass in a relatively simple manner and in a short period of 28 days. When microwaves from a microwave oven were used, the mass of pig III was reduced to said weight in a period of about two days.

## Claims

1. A method for processing a dead human or animal body or part of a body, wherein said body or body part is subjected to
- a dehydration treatment, in which moisture is extracted from the body or the body part,
- a freezing treatment, in which the body or the body part is made brittle to such an extent that a pulse or a small mechanical load imparted thereon may cause the body or body part to fall apart, and
- a reduction treatment after the freezing treatment, in which the body or body part is divided into fractions,
**characterised in that**
- said dehydration treatment is carried out at a temperature higher than the normal live body temperature of the body or the body part.

2. A method according to claim 1, wherein the dehydration treatment is carried out before the freezing treatment.

3. A method according to claim 1 or 2, wherein the dehydration treatment is carried out after the reduction treatment.

4. A method according to claim 1, 2 or 3, wherein the temperature for the dehydration treatment is selected between 50 °C and 95 °C, preferably between 70 °C and 80 °C, more preferably between 75 °C and 77 °C.

5. A method according to any one of the preceding claims 1-4, wherein the dehydration treatment is continued until the weight of the body of body part has decreased to maximally 35%, preferably maximally 30%, more preferably maximally 25% of the normal live weight thereof.

6. A method according to any one of the preceding claims 1-5, wherein the body or body part is exposed to microwaves during the dehydration treatment.

7. A method according to any one of the preceding claims 1-6, wherein the body or the cadaver is exposed to radiation heat, conduction heat and/or convection heat during the dehydration treatment.

8. A method according to any one of the preceding claims 1-7, wherein the body or a body part is exposed to, preferably immersed in, liquid nitrogen (N₂) during the freezing treatment.

9. A method according to any one of the preceding claims 1-8, wherein the reduction treatment comprises a pulse treatment.

10. A method according to any one of the preceding claims 1-9, wherein the reduction treatment comprises a friction treatment.

11. A method according to any one of the preceding claims 1-10, wherein use is made of at least two rigid plates, between which the body or body part is placed during the reduction treatment.

12. A method according to claim 11, wherein the upper plate is suspended in such a manner as to be freely movable in vertical direction.

13. A method according to claim 11 or 12, wherein the lower plate is moved in a pulsating manner so as to obtain an impact or pulse treatment and a friction treatment during the reduction treatment.

14. A method according to any one of the preceding claims 11-13, wherein the lower plate is provided with grooves.

15. A method according to claim 14, wherein the grooves are provided in a herringbone pattern in the surface of the lower plate.

16. A method according to any one of the preceding claims 10-15, wherein the lower plate is connected to at least two drive eccentric shafts.

17. A method according to any one of the preceding claims 11-16, wherein the lower plate is disposed at an inclined angle with respect to the horizontal.

18. A method according to claim 17, wherein the angle of inclination of the lower plate is selected between 0° and 10°, preferably between 4° and 6°.

19. A method according to any one of the preceding claims 11-18, wherein the upper plate is only moved in vertical direction.

20. A method according to any one of the preceding claims 11-19, wherein the plates are maintained at a freezing temperature.

21. A method according to claim 20, wherein liquid nitrogen is passed through the plates.

22. A device for carrying out the method according to any one of the preceding claims 1-21, wherein said device comprises at least two rigid plates for placing the body or body part therebetween, wherein the upper plate preferably is freely movable in vertical direction, and wherein the lower plate is capable of pulsating movement, so that the upper plate can subject the body or body part that is present between the plates to a pulse or impact treatment.

23. A device for carrying out the method according to any one of the preceding claims 1-21, wherein said device comprises a microwave oven for emitting microwaves towards the body or body part, and/or at least one heat device for heating the body or body part through radiation, convection and/or conduction.
